# EUROPÄISCHE PATENTSCHRIFT

(11) **EP 1 617 264 B1**
(45) Veröffentlichungstag und Bekanntmachung des Hinweises auf die Patenterteilung: **30.08.2006**
(21) Anmeldenummer: 04023514.5
(22) Anmeldetag: 01.10.2004
(51) Int. Cl.: G02B 21/00

(54) **Lichtrastermikroskop mit linienförmiger Abtastung**
Light scanning microscope with linear scanning
Microscope à balayage optique avec balayage linéaire

(30) Priorität: 16.07.2004 DE 102004034968
(43) Veröffentlichungstag der Anmeldung: 18.01.2006
(73) Patentinhaber: CARL ZEISS JENA GmbH, 07745 JENA (DE)
(72) Erfinder: Wolleschensky, Ralf, 99510 Apolda (DE)

(56) Entgegenhaltungen:
- DE-A1- 10 257 237
- US-A1- 2004 031 930

## Beschreibung

In DE10257237 A1 ist ein Strahlteiler, unter anderem für einen Linienscanner beschrieben.
Bei einem Linienscanner wird die Probe mit einem Linienfokus (z.B. entlang der X-Koordinate) beleuchtet, die in der Koordinate (Y) senkrecht zur Linie verschoben wird. Hierzu wird die Lichtquelle in eine Zwischenbildebene der Mikroskopeinrichtung mittels einer Optik linienförmig fokussiert. Durch die Fokussierung in Y- Richtung im Zwischenbild, beispielsweise durch eine Zylinderlinse, ergibt sich eine beugungsbegrenzte linienförmige Intensitätsverteilung entlang X auf der Probe. Mit einer weiteren Optik wird das Licht in die Pupille der Mikroskopanordnung abgebildet. In den Pupillenebenen der Mikroskopanordnung ergibt sich jeweils ein Linienfokus Die Pupillenebenen und der Scanner sind zueinander und zur rückwärtigen Brennebene des Objektiv konjugierte Pupillenebenen der Mikroskopanordnung, so dass der Scanner die linienförmige und beugungsbegrenzt fokussierte Intensitätsverteilung senkrecht zu dieser bewegen kann (y-Koordinate in der Probe). Die Abbildung in die Probe erfolgt über eine Scanoptik , die Tubuslinse und das Objektiv . Eine Relayoptik erzeugt konjugierte Pupillenebenen der Mikroskopanordnung. Aufgrund der Art der Probenwechselwirkung z.B. bei einer Fluoreszenz- oder Lumineszenzanregung ist das von der Probe emittierte Licht von geringer räumlicher Kohärenz. D.h. jeder in der Probe angeregte Punkt strahlt im wesentlichen unabhängig von den benachbarten Punkten als Punktstrahler in alle Raumrichtungen ab. Die Optik , z.B. ein Mikroskopobjektiv) bildet die einzelnen Punktstrahler gemeinsam mit der Tubuslinse TL in eine Zwischenbildebene ZB der Mikroskopeinrichtung ab, wobei die Pupille P gleichförmig von zueinander im wesentlichen inkohärenten Wellenfronten verschiedener Ausbreitungsrichtung ausgeleuchtet wird (gestrichelter Strahlengang). In der Pupille befindet sich das in Element , welches die Trennung des Anregungsvom Detektionslicht vornimmt. Er ist wie in DE beschrieben ausgebildet.

### Abb.1:

Das Licht einer Weitfeld- Lichtquelle LQ wird mit einer geeigneten Optik zur Erzeugung einer Beleuchtungslinie , beispielsweise einer Zylinderlinse ZL , linienförmig in eine zur Pupille P des Mikroskopobjektives O konjugierte Ebene fokussiert , in der sich ein gemäß DE 10257237A1, die Gegenstand der Offenbarung ist , aufgebauter Strahlteiler ST befindet, der hier einen schmalen linienförmigen transmittiven Bereich aufweist, über den die Linie über eine Übertragungsoptik L1, L2, Scanoptik SO , Tubuslinse TL und Objektiv O in die Probe PR abgebildet wird.
In einer Pupille P ist ein Scanner SC angeordnet, der die Linie in einer Scanrichtiung senkrecht zur Linienausdehnung schnell über die Probe bewegt.
Das von der Probe kommende Licht (gestrichelt) wird vom bis auf den schmalen transmittiven Bereich in Detektionsrichtrung reflektierenden Strahlteiler über einen auswechselbaren Filter F sowie eine Detektionsoptik PO in Richtung eines Detektors DE1 umgelenkt , dem eine Schlitzblende vorgeordnet sein kann.

### Abb.2:

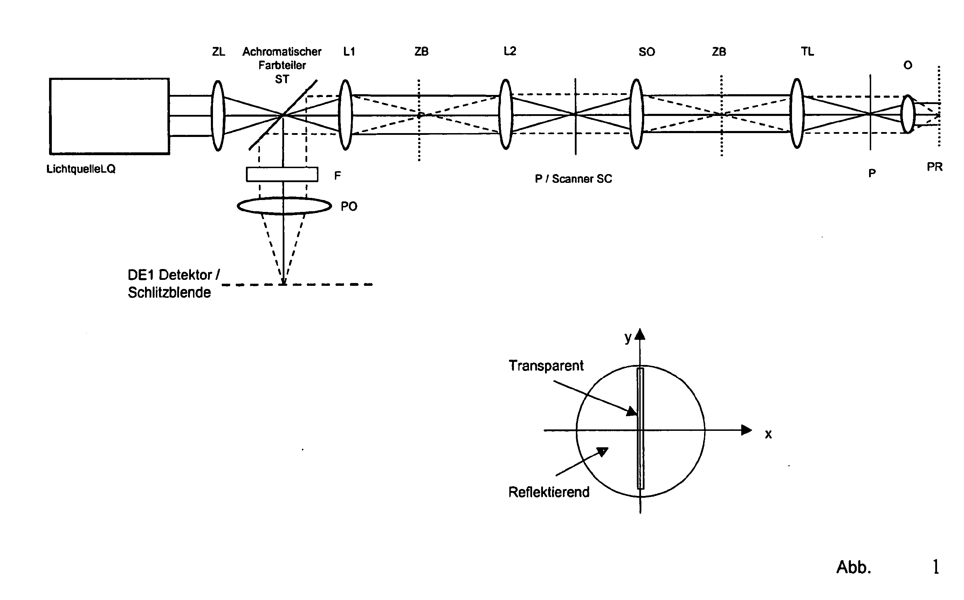

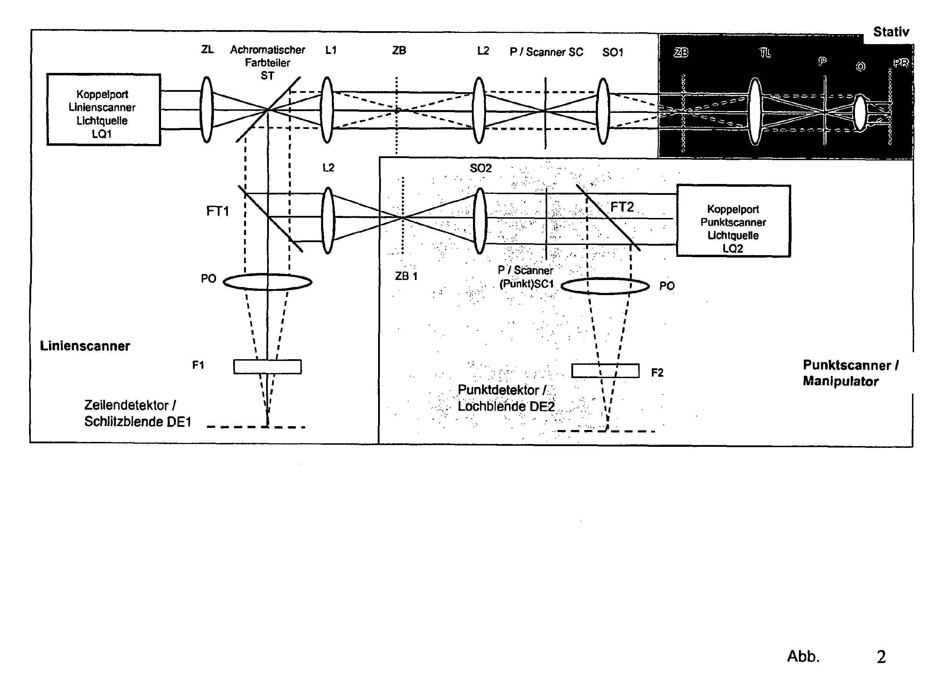

Hier sind beispielhaft zusätzlich zu den in Abb.1 dargestellten Elementen an Koppelports Lichtquellen LQ1, LQ2 dargestellt, die auch durch Verzweigung einer einzigen Lichtquelle entstehen können, wobei Wellenlänge und Intensität vorteilhaft einstellbar sind.
Durch Verwendung achromatischer Strahlteiler wie in DE... beschrieben besteht der besondere Vorteil, daß für beide Lichtquellen LQ1, LQ2 die gleiche Wellenlänge verwendet werden kann, die auch durch Aufteilung ein- und derselben Lichtquelle gebildet werden können. Die Zwischenbilder ZB und ZB1 sind zueinander konjugierte Ebenen. Weiterhin sind die Pupillenebenen der Mikroskopanordnung P zueinander konjugierte Ebenen. Die jeweils konjugierten Ebenen werden durch die Wirkung der jeweils zwischen liegenden Optiken (die als Relayoptiken wirken - Strahlengänge nur schematisch eingezeichnet) erzeugt.

LQ 2 kann beispielsweise ein Punktscanner sein . Das Beleuchtungslicht des Punktscanners kann vorteilhaft zur gezielten Manipulation (z.B. uncaging) auf bestimmten Probenbereichen verwendet werden.
Das Beleuchtungslicht von LQ2 wird nach Durchgang durch eine separate Scanoptik SO2 sowie einen Scanner SC1 ( vorteilhaft ein X/Y Scanner ) über einen üblichen dichroitischen Farbteiler FT1 in den Detektionsstrahlengang des Linienscanners eingeblendet und gelangt über den reflektiven Bereich des Teilers ST in Richtung der Probe PR.

Vorteilhaft wird also der reflekierende Bereich des Strahlteilers ST zur Einspiegelung eines weiteren Scanstrahlenganges ausgenutzt.
Das von der Probe kommende Licht gelangt einerseits zum Detektor DE1 und andererseits je nach Auslegung des Farbteilers FT1 auch über einen weiteren Farbteiler FT2 in Richtung eines zweiten Detektors DE2.
Beispielsweise gelangt von der Probe kommendes durch LQ1 angeregtes Fluoreszenzlicht bei entsprechender Auslegung von FT1 auf den Detektor DE1 während reflektiertes Licht des Punktscanners LQ2 auf den Detektor DE2 gelangt. Weiterhin können auch durch LQ1 bzw. LQ2 angeregte unterschiedliche Fluoreszenzwellenlängen auf die unterschiedlichen Detektoren DE1 und DE2 gelangen.

Da hier das vom Scanner SC1 bewegte Licht zusätzlich durch den Scanner 1 bewegt wird, muß der Scanner SC1 so angesteuert werden, daß er die Bewegung des Scanners SC kompensiert und zusätzlich eine Relativposition zur Linienbeleuchtung realisiert.
Das ist einfach zu realisieren wenn sich Scanner SC1 im Vergleich zum Scanner SC2 langsamer bewegt.
Das durch LQ2 angeregte Fluoreszenzlicht kann auch auf den Zeilendetektor DE1 geleitet werden.
Je nach Stellung des Scanners 2 bewegt sich der Fuoreszenzspot über den Zeilendetektor DE 1 hinweg, d.h. das Licht wird hierzu vor dem Scanner 2 in Richtung DE1 abgetrennt.

### Abb.3

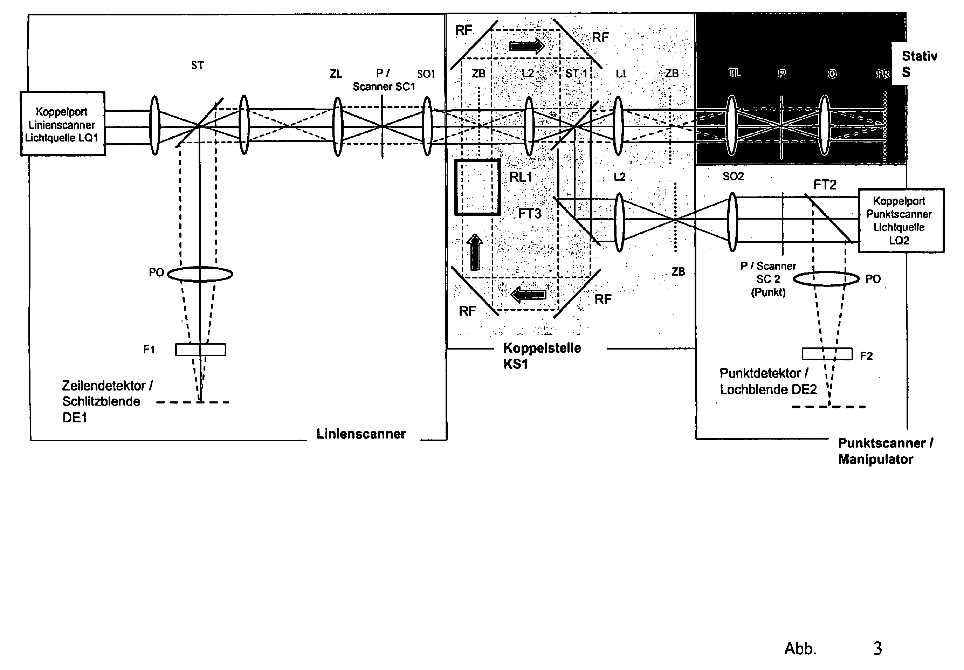

Hier ist eine Koppelstelle KS1 vorgesehen, die ein separates Modul sein kann und sich zwischen einem Mikroskopstativ S mit Tubuslinse und Objektiv, einer ersten Scaneinheit SC 1 und einer zweiten Scaneinheit SC 2 befindet.
SC 1 kann den beschriebenen Linienscanner beinhalten und SC2 einen Punktscanner zur Abtastung und/ oder Manipulation.
SC1 und SC 2 sind an Schnittstellen an KS1 ankoppelbar.
Hierzu stehen in KS1 mehrere zueinander konjugierte Zwischenbilder ZB zur Verfügung ( über die Optiken L1, L2). Die jeweils konjugierten Ebenen werden durch die Wirkung von jeweils dazwischen zwischen liegenden Optiken (Strahlengänge nur schematisch) erzeugt.
Am Strahlteiler ST1 , der analog zum Strahlteiler ST aufgebaut ist ( DE...)wird durch den transmittierenden Bereich hindurch eine Linie auf die Probe abgebildet. Er ist hierzu in einer Pupillenebene der Mikroskopanordnung angebracht.
Beispielsweise mit SC1 in der Probe angeregtes Licht wie Fluoreszenzlicht wird an ST 1 nach unten reflektiert und gelangt über FT3 , der hier so ausgebildet ist, dass er diesen Lichtanteil durchläßt, sowie über mehrfach umlenkende Reflektoren RF auf die andere Seite von ST1. Durch ST1 wird dieses Licht in Richtung des Detektors DE1 über ST abgelenkt.
Vorteilhaft wird also das vom Linienscanner angeregte Fluoreszenzlicht , das an ST1 zur Seite reflektiert wird, in der gesamten Breite wieder in den Strahlengang Richtung DE1 gebracht.
Es kann also über FT3 ein weiterer Scanner SC2 eingespiegelt werden, wobei durch entsprechende Ausbildung von FT3, der auswechselbar sein kann, unterschiedliche Fluoreszenzwellenlängen zu DE1 bzw. DE2 gelangen können. Die Betriebsart ist analog zur oben beschriebenen.
Im Gegensatz zu Abb. 3 können hier die Scanner 1 und 2 vorteilhaft unabhängig voneinander arbeiten.

### Abb.4:

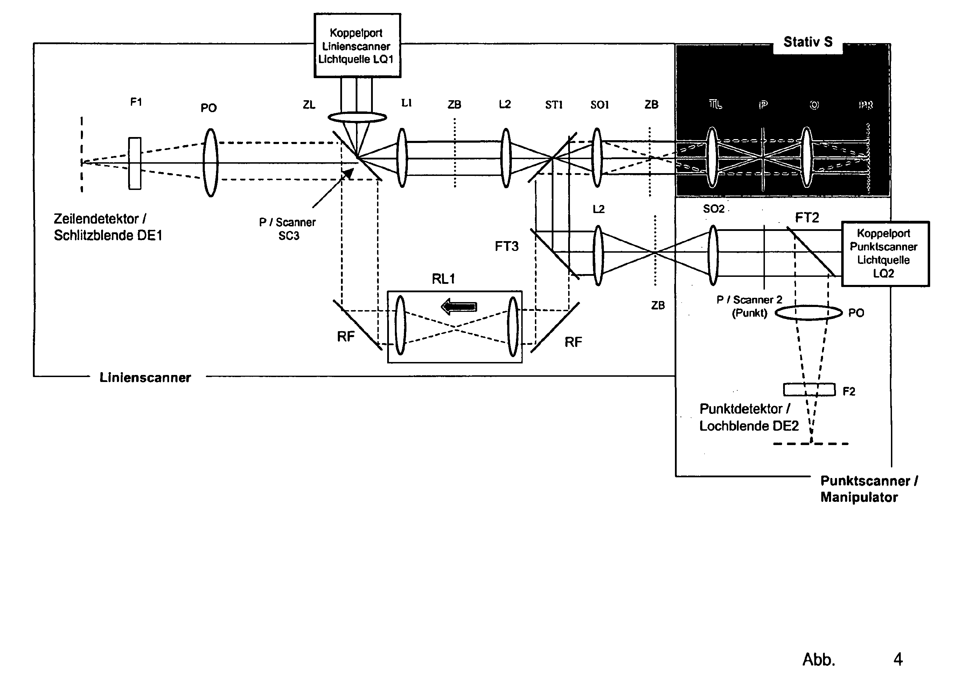

Hier wird das Licht über Reflektoren RF nicht wie in Abb.4 auf die Rückseite des Strahlteilers ST1 gelenkt sondern auf die Rückseite des Scanners SC33, der hier ein auf Vorder- und Rückseite verspiegelter Spiegel ist und mit seiner Rückseite das von der Probe kommende vom Linienscanner ( LQ1 gelangt von oben auf die Vorderseite des Scannerspiegels ) angeregte Probenlicht ( descannt) zum Detektor DE1 weiterleitet. FT 3 ist hierbei so ausgebildet, dass er das für den Detektor DE1 bestimmte Licht hindurchläßt und nur das für DE2 bestimmte Licht reflektiert. Hierdurch können wiederum vom Linienscanner und vom Punktscanner angeregte unterschiedliche Fluoreszenzen vorteilhaft gleichzeitig detektiert werden.

### Abb.5:

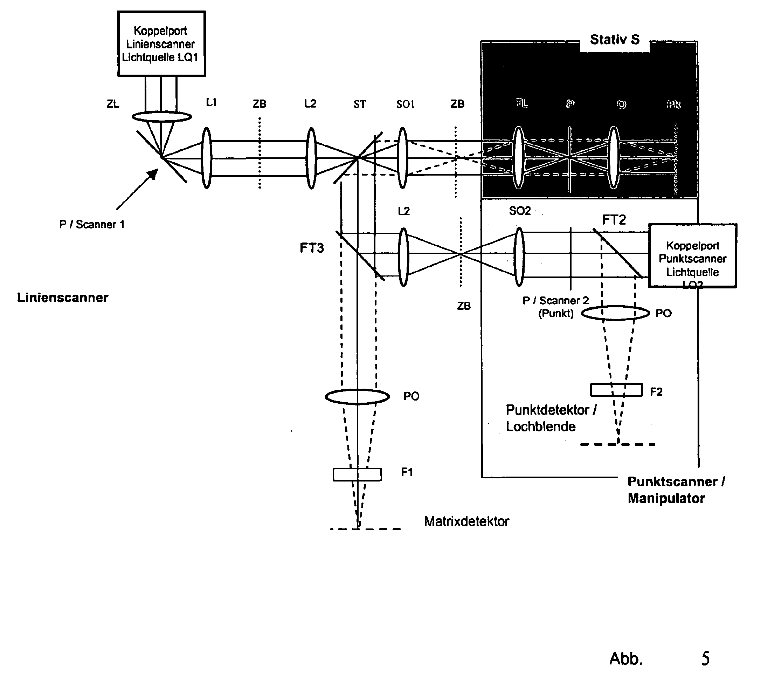

Hier wird das vom Linienscanner angeregte Licht nicht wie in Abb. 5 descannt sondern gelangt über FT1 hindurch direkt auf einen Flächendetektor ( CCD Matrix, gegatete Kamera), d.h. die linienförmige Lichtverteilung die von der Probe kommt läuft in Scanrichtung über die Empfängerflächen der hierdurch ein Probenbild aufzeichnet.

Bei allen Anordnungen können prinzipiell auch weitere Scananordnungen durch Kaskadierung (Anordnung weiterer Farbteiler FT in einen gemeinsamen Strahlengang eingespiegelt werden. Die Scananordnungen können beliebige bildgebende Anordnungen sein. Beispiele sind die bereits erwähnten Punktscanner aber auch Resonanzpunktscanner, Nipkowscanner, Linienscanner und Multipunktscanner. Weiterhin können dies auch weitfeldbasierte Mikroskopsysteme sein. Vorteilhaft ist hierbei, dass sie als Schnittstelle eine Zwischenbildebene aufweisen.

## Patentansprüche

1. Lichtrastermikroskop mit linienförmiger Abtastung und einer Beleuchtung einer Probe über einen Strahlteiler, der in einer Objektivpupille angeordnet ist und aus zumindest einem reflektierenden ersten Abschnitt und zumindest einem transmittierenden zweiten Abschnitt besteht, wobei der reflektierende Abschnitt für die Einkopplung des Beleuchtungslichtes dient und der transmittierende Abschnitt für den Durchgang des Detektionslichtes in Richtung der Detektion oder der transmittierende für die Einkopplung des Beleuchtungslichtes und der reflektive für die Auskopplung des Detektionslichtes dient,
mit einer ersten scannenden Anordnung,
**dadurch gekennzeichnet, dass** im Detektionsstrahlengang Mittel zur Einblendung mindestens einer weiteren scannlenden Anordnung zur Beleuchtung und Detektion vorgesehen sind.

2. Lichtrastermikroskop mit linienförmiger Abtastung und Beleuchtung einer Probe über einen Strahlteiler, der in einer Objektivpupille angeordnet ist
und aus zumindest einem reflektierenden ersten Abschnitt und zumindest einem transmittierenden zweiten Abschnitt besteht, wobei der reflektierende Abschnitt für die Einkopplung des Beleuchtungslichtes dient und der transmittierende Abschnitt für den Durchgang des Detektionslichtes in Richtung der Detektion oder der transmittierende für die Einkopplung des Beleuchtungslichtes und der reflektive für die Auskopplung des Detektionslichtes dient,
mit einer ersten scannenden Anordnung,
**dadurch gekennzeichnet, dass** über den Strahlteiler mindestens eine weitere scannende Anordnung eingekoppelt wird
und über Umlenkmittel eine Umlenkung eines Teils des Probenlichtes auf die von der Probe abgewandte Seite des Strahlteilers erfolgt über die das Probenlicht in Richtung der Detektionseinheit der ersten scannenden Anordnung gelangt.

3. Lichtrastermikroskop mit linienförmiger Abtastung und Beleuchtung einer Probe über einen Strahlteiler, der in einer Objektivpupille angeordnet ist und aus zumindest einem reflektierenden ersten Abschnitt und zumindest einem transmittierenden zweiten Abschnitt besteht, wobei der reflektierende Abschnitt für die Einkopplung des Beleuchtungslichtes dient und der transmittierende Abschnitt für den Durchgang des Detektionslichtes in Richtung der Detektion oder der transmittierende für die Einkopplung des Beleuchtungslichtes und der reflektive für die Auskopplung des Detektionslichtes dient, mit einer ersten scannenden Anordnung mit mindestens einem Scanspiegel,
**dadurch gekennzeichnet, dass** über den Strahlteiler mindestens eine weitere scannende Anordnung eingekoppelt wird
und über Umlenkmittel mindestens ein Teil des Probenlichtes auf die verspiegelte Rückseite des Scanspiegels und von dieser in Richtung der Detektion gelangt.

4. Lichtrastermikroskop mit linienförmiger Abtastung und Beleuchtung einer Probe über eine Strahlteiler, der in einer Objektivpupille angeordnet ist und aus zumindest einem reflektierenden ersten Abschnitt und zumindest einem transmittierenden zweiten Abschnitt besteht, wobei der reflektierende Abschnitt für die Einkopplung des Beleuchtungslichtes dient und der transmittierende Abschnitt für den Durchgang des Detektionslichtes in Richtung der Detektion oder der transmittierende für die Einkopplung des Beleuchtungslichtes und der reflektive für die Auskopplung des Detektionslichtes dient, mit einer ersten scannenden Anordnung **dadurch gekennzeichnet, dass** über den Stahlteiler mindestens eine weitere scannende Anordnung eingekoppelt wird und das Probenlicht über den Strahlteiler ohne Durchgang durch einen Scanner detektiert wird.

## Claims

1. Laser scanning microscope with line scanning and illumination of a sample via a beam splitter which is disposed in an objective pupil and consists of at least one reflective first portion and at least one transmitting second portion, wherein the reflective portion serves to couple in the illumination light and the transmitting portion allows the passage of the detection light in the direction of detection or the transmitting portion serves to couple in the illumination light and the reflective portion serves to couple out the detection light, having a first scanning arrangement,
**characterised in that** the detection beam path is provided with means for fading in at least one further scanning arrangement for illumination and detection purposes.

2. Laser scanning microscope with line scanning and illumination of a sample via a beam splitter which is disposed in an objective pupil and consists of at least one reflective first portion and at least one transmitting second portion, wherein the reflective portion serves to couple in the illumination light and the transmitting portion allows the passage of the detection light in the direction of detection or the transmitting portion serves to couple in the illumination light and the reflective portion serves to couple out the detection light, having a first scanning arrangement,
**characterised in that** at least one further scanning arrangement is coupled in via the beam splitter
and some of the sample light is diverted via diverting means to the side of the beam splitter remote from the sample, by means of which the sample light passes in the direction of the detection unit of the first scanning arrangement.

3. Laser scanning microscope with line scanning and illumination of a sample via a beam splitter which is disposed in an objective pupil and consists of at least one reflective first portion and at least one transmitting second portion, wherein the reflective portion serves to couple in the illumination light and the transmitting portion allows the passage of the detection light in the direction of detection or the transmitting portion serves to couple in the illumination light and the reflective portion serves to couple out the detection light, having a first scanning arrangement with at least one scanning mirror,
**characterised in that** at least one further scanning arrangement is coupled in via the beam splitter,
and at least some of the sample light passes via diverting means to the mirrored rear side of the scanning mirror from where it travels in the direction of detection.

4. Laser scanning microscope with line scanning and illumination of a sample via a beam splitter which is disposed in an objective pupil and consists of at least one reflective first portion and at least one transmitting second portion, wherein the reflective portion serves to couple in the illumination light and the transmitting portion allows the passage of the detection light in the direction of detection or the transmitting portion serves to couple in the illumination light and the reflective portion serves to couple out the detection light, having a first scanning arrangement, **characterised in that** at least one further scanning arrangement is coupled in via the beam splitter and the sample light is detected via the beam splitter without passing through the scanner.

## Revendications

1. Microscope à balayage optique avec balayage linéaire et un éclairage d'un échantillon par un diviseur de rayon, qui est disposé dans une pupille d'objectif et se compose d'au moins une première partie réfléchissante et d'au moins une seconde partie transmettrice, la partie réfléchissante servant à l'injection de la lumière d'éclairage et la partie transmettrice servant au passage de la lumière de détection en direction de la détection ou bien la partie transmettrice servant à l'injection de la lumière d'éclairage et la partie réflectrice à la dissociation de la lumière de détection,
avec un premier agencement de balayage,
**caractérisé en ce que** des moyens pour l'injection d'au moins un autre agencement de balayage sont prévus dans la trajectoire du rayon de détection pour l'éclairage et la détection.

2. Microscope à balayage optique avec balayage linéaire et éclairage d'un échantillon par un diviseur de rayon, qui est disposé dans une pupille d'objectif, et comprend au moins une première partie réfléchissante et au moins une seconde partie transmettrice, la partie réfléchissante servant à l'injection de la lumière d'éclairage et la partie transmettrice au passage de la lumière de détection en direction de la détection ou bien la partie transmettrice servant à l'injection de la lumière d'éclairage et la partie réfléchissante à la dissociation de la lumière de détection,
avec un premier agencement de balayage,
**caractérisé en ce qu'**au moins un autre dispositif de balayage est injecté par le diviseur de rayon
et une déviation d'une partie de la lumière d'échantillon sur le côté, opposé à l'échantillon, du diviseur de rayon s'effectue par des moyens de déviation, côté par lequel la lumière de l'échantillon parvient en direction de l'unité de détection du premier agencement de balayage.

3. Microscope à balayage optique avec balayage linéaire et éclairage d'un échantillon au moyen d'un diviseur de rayon qui est disposé dans une pupille d'objectif et se compose d'au moins une première partie réfléchissante et d'au moins une seconde partie transmettrice, la partie réfléchissante servant à l'injection de la lumière d'éclairage et la partie transmettrice au passage de la lumière de détection en direction de la détection ou bien la partie transmettrice servant à l'injection de la lumière d'éclairage et la partie réfléchissante à la dissociation de la lumière de détection, avec un premier agencement de balayage comprenant au moins un miroir de balayage,
**caractérisé en ce qu'**au moins un autre agencement de balayage est injecté au moyen du diviseur de rayon et au moins une partie de la lumière d'échantillon parvient par des moyens de déviation sur le côté arrière argenté du miroir de balayage et de ce côté en direction de la détection.

4. Microscope à balayage optique avec balayage linéaire et éclairage d'un échantillon au moyen d'un diviseur de rayon, qui est disposé dans une pupille d'objectif et se compose d'au moins une première partie réfléchissante et d'au moins une seconde partie transmettrice, la partie réfléchissante servant à l'injection de la lumière d'éclairage et la partie transmettrice au passage de la lumière de détection en direction de la détection ou la partie transmettrice à l'injection de la lumière d'éclairage et la partie réflectrice à la dissociation de la lumière de détection, avec un premier agencement de balayage, **caractérisé en ce qu'**au moins un autre agencement de balayage est injecté au moyen du diviseur de rayon et la lumière d'échantillon est détecté par le diviseur de rayon sans passage dans un scanner.
